# EUROPÄISCHE PATENTSCHRIFT

(11) **EP 3 995 904 B1**
(45) Veröffentlichungstag und Bekanntmachung des Hinweises auf die Patenterteilung: **21.01.2026**
(21) Anmeldenummer: 21206564.3
(22) Anmeldetag: 04.11.2021
(51) Int. Cl.: G03H 1/00, G03H 1/04, G03H 1/26, G03H 1/28

(54) **VERFAHREN ZUR HERSTELLUNG EINES SICHERHEITSHOLOGRAMMS UND SICHERHEITSHOLOGRAMM**
SECURITY HOLOGRAM AND METHOD FOR PRODUCING A SECURITY HOLOGRAM
PROCÉDÉ DE FABRICATION D'UN HOLOGRAMME DE SÉCURITÉ ET HOLOGRAMME DE SÉCURITÉ

(30) Priorität: 04.11.2020 DE 102020213901
(43) Veröffentlichungstag der Anmeldung: 11.05.2022
(73) Patentinhaber: Bundesdruckerei GmbH, 10969 Berlin (DE)
(72) Erfinder: Kunath, Christian, 12203 Berlin (DE); Sprenger, Martin, 10317 Berlin (DE); Klünder, Kathrin, 10997 Berlin (DE); Gahlbeck, Jeffry, 15517 Fürstenwalde (DE); Leopold, André, 10119 Berlin (DE); Renner, Martin, 16766 Kremmen (DE)
(74) Vertreter: Obst, Bernhard

(56) Entgegenhaltungen:
- EP-A1- 1 131 681
- US-A1- 2017 090 421
- US-B2- 6 747 770

## Beschreibung

Die Erfindung betrifft ein Verfahren und eine Vorrichtung zur Herstellung von Sicherheitshologrammen, wie sie in Wert- oder Sicherheitsdokumenten als Sicherheitselement eingesetzt werden.

Wert- und/oder Sicherheitselemente weisen Sicherheitsmerkmale auf, um deren Echtheit und Unverfälschtheit prüfen zu können. Ein Sicherheitsmerkmal ist hierbei jedes Merkmal, welches geeignet ist, die Authentizität des mit dem Sicherheitsmerkmal versehenen Elements überprüfen zu können. Ein Sicherheitselement ist jede physische Einheit, die ein solches Sicherheitsmerkmal aufweist. Insbesondere sind Sicherheitsdokumente, wie Reisepässe, Führerscheine, Visa usw. oder Wertdokumente, wie Bankkarten, Schecks, Wertmarken usw. Sicherheitselemente, aber auch Halbzeuge, wie Hologrammfilme für das Einfügen in Sicherheitsdokumente etc., Sicherheitselemente.

Ein Überprüfen eines Sicherheitsmerkmals wird als Verifikation bezeichnet. Eine Gruppe von Sicherheitsmerkmalen ist für eine optische Verifikation vorgesehen. Eine Untergruppe von Sicherheitsmerkmalen nutzt Eigenschaften von Hologrammen.

Beispielsweise werden in Reisepässen und Personalausweisen der Bundesrepublik Deutschland Volumenreflexionshologramme eingesetzt, die ein Passbild sowie persönliche Daten, wie die Namen und die Ausweisnummer, die jeweils auch drucktechnisch in dem Ausweis wiedergegeben sind, speichern. Bei einer entsprechenden Beleuchtung mit Rekonstruktionslicht einer geeigneten Wellenlänge und einer Betrachtung unter einer geeigneten Richtung bei der Verifikation sind die persönlichen Daten wahrnehmbar. Diese Hologramme werden in einem sogenannten Kontaktkopierverfahren hergestellt. Ein Masterhologramm, welches beispielsweise ein Reflexionshologramm einer Mattscheibe ist, wird über einen räumlichen Lichtmodulator beim Kontaktkopieren individualisiert in das später auf dem Sicherheitsdokument verwendete Volumenreflexionshologramm belichtet. Die EP 0 896 260 A2 beschreibt die Herstellung eines solchen Hologrammmasters. Erwähnt ist ferner, dass beim Kopieren des Masterhologramms eine Belichtung unter unterschiedlichen Aspektwinkeln erfolgen kann, um einen Stereoeffekt zu erzielen.

US2017/090421 A1 beschreibt eine Bildaufzeichnungsvorrichtung mit einer Laserstrahlquelle, die einen Laserstrahl emittiert, einer Teilungseinheit, die den von der Laserstrahlquelle emittierten Laserstrahl in zwei Laserstrahlen teilt, einer Anzeigevorrichtung, die Bilder über einen in Segmente unterteilten Anzeigebereich anzeigt, einer Anzeigesteuerung, die die Anzeige der Anzeigevorrichtung so steuert, dass Bilder zur Bildung eines holographischen Stereogramms auf den Segmenten des Anzeigebereichs angezeigt werden und dass einer der Laserstrahlen durch die auf der Anzeigevorrichtung angezeigten Bilder moduliert wird, um zu Objektstrahlen zu werden, einem optisches System, das die Objektstrahlen auf ein Hologramm-Aufzeichnungsmedium abbildet, so dass die Objektstrahlen übereinander gelegt werden, und einer Bestrahlungseinheit, die das Hologramm-Aufzeichnungsmedium neben den Objektstrahlen mit dem anderen, von der Teilungseinheit geteilten Laserstrahl als Referenzstrahl bestrahlt.

Ebenso ist es bekannt, dass es mit der Holografie möglich ist, von realen dreidimensionalen Objekten in einen Film unmittelbar Hologramme zu belichten, die anschließend eine dreidimensionale Betrachtung des Objekts bei der Rekonstruktion ermöglichen. Verändert ein Nutzer seine Betrachtungsposition, so sieht er eine andere Ansicht des dreidimensionalen Objekts bei der Rekonstruktion. Eine Herstellung von solchen dreidimensionalen Hologrammen ist jedoch sehr aufwendig und daher für die Nutzung als Sicherheitselement nur begrenzt tauglich. Insbesondere ist es schwierig, individuelle Hologramme herzustellen, die einen dreidimensionalen Eindruck bei der Rekonstruktion und bei der Betrachtung unterschiedliche Ansichten des Objekts aus unterschiedlichen Richtungen liefern.

Der Erfindung liegt somit die technische Aufgabe zugrunde, ein verbessertes Verfahren zur Herstellung von holografischen Sicherheitselementen und verbesserte Sicherheitselemente zu schaffen, die eine solche dreidimensionale Erfassbarkeit bei der Rekonstruktion eines Sicherheitshologramms ermöglichen.

Die Erfindung wird durch ein Verfahren mit den Merkmalen des Patentanspruchs 1 sowie ein Sicherheitshologramm mit den Merkmalen des Patentanspruchs 7 gelöst. Vorteilhafte Ausgestaltungen der Erfindung ergeben sich aus den Unteransprüchen.

Der Erfindung liegt die Idee zugrunde, aus unterschiedlichen Richtungen monoskopische Abbildungen, d.h. Abbildungen, die selbst keine Tiefeninformation enthalten, zu erstellen und die verschiedenen monoskopischen Abbildungen überlagert in ein Aufzeichnungsmaterial holografisch unter verschiedenen Belichtungsrichtungen zu belichten, wobei die Belichtung so vorgenommen wird, dass die Belichtungsrichtungen alle in einer Ebene liegen und zumindest paarweise einen Normkonvergenzwinkel für eine menschliche Betrachtung einschließen. Dies bedeutet, dass bei der Rekonstruktion einzelne monoskopische rekonstruierte Abbildungen in Rekonstruktionsrichtungen, die mit den Belichtungsrichtungen übereinstimmen, jedoch entgegengesetzt orientiert sind, rekonstruiert werden. Die Rekonstruktionsrichtungen, welche den Belichtungsrichtungen entsprechen, sind so gewählt, dass ein menschlicher Betrachter unter zumindest einer Betrachtungsgeometrie mit dem einen Auge die eine der beiden rekonstruierten Abbildungen und mit dem anderen Auge die andere der beiden rekonstruierten Abbildungen wahrnimmt, sodass das menschliche Gehirn hieraus ein dreidimensionales Objekt rekonstruiert. Der Normkonvergenzwinkel kann aus einem Normabstand, der einem Sollabstand entspricht, aus dem das Hologramm bei der Rekonstruktion betrachtet werden soll, und einem Normaugenabstand errechnet werden, der anhand eines empirisch ermittelten Mittelwert für Erwachsene festgelegt werden kann und beispielsweise im Bereich zwischen 5,2 cm und 7,8 cm beträgt und im Mittel für Männer bei 6,5 cm und für Frauen bei 6,2 cm liegt. Im Zweifel wird als Normaugenabstand ein Wert von 6,5 cm angenommen. Der Sollbetrachtungsabstand für die Rekonstruktion und somit der Normabstand kann für eine Sicherheitshologramm festgelegt werden und liegt in der Regel im Bereich von 30 cm bis 50 cm. Insbesondere wird ein Verfahren zum Herstellen eines Sicherheitshologramms geschaffen, welches die Schritte umfasst: Bereitstellen von mehreren, mindestens drei, monoskopischen Abbildungen eines dreidimensionalen Objekts aus unterschiedlichen Erfassungsrichtungen, wobei jede der mehreren Abbildungen genau einer der unterschiedlichen Erfassungsrichtungen zugeordnet ist; Bereitstellen eines holografischen Aufzeichnungsmaterials; Erzeugen kohärenter Laserstrahlung und Aufteilen der Laserstrahlung in einen Referenzanteil und mindestens einen Objektanteil und Führen des Referenzanteils und des mindestens einen Objektanteils, sodass der Referenzanteil und der mindestens eine Objektanteil das Aufzeichnungsmaterial von entgegengesetzten Seiten durchstrahlen und im Innern des Aufzeichnungsmaterials interferieren, wobei die mehreren Abbildungen unter verschiedenen Belichtungsrichtungen mittels des mindestens einen Objektanteils bezüglich des Aufzeichnungsmaterials projiziert werden, wobei jede der mehreren Abbildungen genau einer der verschiedenen Belichtungsrichtungen zugeordnet ist, wobei die Belichtungsrichtungen alle in einer Ebene liegen und zumindest paarweise einen Normkonvergenzwinkel für eine menschliche Betrachtung einschließen. Man erhält auf diese Weise ein Sicherheitshologramm, welches als ein Multiplex-Volumenreflexionshologramm in einer Hologrammschicht ausgebildet ist, in das mehrere, mindestens drei, monoskopische Abbildungen desselben dreidimensionalen Objekts belichtet sind, die das Objekt aus unterschiedlichen Erfassungsrichtungen abbilden, und bei einer Einstrahlung von Referenzlicht auf die Hologrammschicht die mehreren Abbildungen unter verschiedenen Rekonstruktionsrichtungen bezüglich der Hologrammschicht rekonstruieren, wobei jeder der mehreren Abbildungen genau und eindeutig eine der verschiedenen Rekonstruktionsrichtungen zugeordnet ist, wobei die Rekonstruktionsrichtungen alle in einer Ebene liegen und zumindest paarweise einen Normkonvergenzwinkel für eine menschliche Betrachtung einschließen. Hierdurch wird ein Sicherheitselement in Form eines Sicherheitshologramms geschaffen, welches aus unterschiedlichen Richtungen das abgebildete Objekt dreidimensional für einen menschlichen Betrachter wahrnehmbar wiedergibt. Hierbei kann aus stark unterschiedlichen Betrachtungsrichtungen und/oder sehr verschiedene Ansichten des dreidimensionalen Objekts eine hohe räumliche Tiefenwirkung erzielt werden. Darüber hinaus ist es möglich, da die Belichtung unmittelbar in das Aufzeichnungsmaterial erfolgt, auch in Großserie unterschiedliche dreidimensionale Objekte zu belichten. Mit dem Verfahren ist es somit möglich, eine Vielzahl von Sicherheitshologrammen in Form von Multiplex-Volumenreflexionshologrammen zu schaffen, die sich alle jeweils individuell von den anderen Sicherheitshologrammen der Vielzahl unterscheiden.

Bei Einstrahlung von Referenzlicht aus einer Richtung werden immer zumindest zwei Abbildungen rekonstruiert, deren Rekonstruktionsrichtungen den Normkonvergenzwinkel für einen menschlichen Betrachter einschließen.

Insgesamt kann der Blickwinkel auf ein Objekt gegenüber einem einfachen Volumenhologramm, welches als 3D-Volumenhologramm aufgezeichnet wird, deutlich erweitert werden. Die monoskopischen Abbildungen, die ein Objekt aus unterschiedlichen Richtungen aufnehmen, können auf einfache Weise hergestellt werden. Somit wird der Herstellungsprozess massentauglich.

Erfindungsgemäß ist vorgesehen, dass ein Winkel zwischen zwei Blickrichtungen größer als ein Winkel zwischen den Betrachtungsrichtungen der zugehörigen stereoskopischen Ansichten ist. Eine Änderung der Betrachtungsposition oder Verkippung des Sicherheitshologramms um einen Winkel bewirkt, dass sich das Objekt in den erfassten stereoskopischen Ansichten um einen größeren Winkel gedreht hat.

Erfindungsgemäß ist vorsehen, dass kleine Änderungen der Belichtungsrichtungen mit größeren Änderungen der Erfassungsrichtung korrespondieren. Hierdurch wird es möglich, beispielsweise eine Änderung der Erfassungsrichtung um 180° mit einer Änderung der Belichtungsrichtung um 45° zu assoziieren. Dies bewirkt, dass kleinere Änderungen der Betrachtungsrichtung des Sicherheitshologramms größeren Änderungen der Erfassungsrichtungen des Objekts entsprechen und so beispielsweise eine Rundumsicht um das dreidimensionale Objekt in einem Winkelbereich von +/- 45° gegenüber der Lotrechten des Sicherheitshologramms möglich werden. Hierdurch werden neuartige Möglichkeiten für die Informationsspeicherung eines dreidimensionalen Objekts in dem Sicherheitshologramm ermöglicht. Dennoch nimmt der menschliche Betrachter das dreidimensionale Objekt jeweils als dreidimensionales Objekt mit Tiefenwirkung wahr.

Bei nicht beanspruchten Ausführungsformen korrespondieren die Belichtungsrichtungen mit den Erfassungsrichtungen der monoskopischen Abbildungen. Dies bedeutet, dass die Winkel der Erfassungsrichtungen in einer Ebene untereinander Winkel einschließen, die identisch mit den Winkeln der Belichtungsrichtungen sind, die diese in einer Ebene einschließen. Eine Bewegung des menschlichen Betrachters relativ zu dem erzeugten Sicherheitshologramm führt dazu, dass die Wahrnehmung des Objekts bei einer Änderung der Betrachtungsrichtung der Änderung der Wahrnehmung entspricht, die einer entsprechenden Veränderung der Blickrichtung wie bei einem realen Objekt entsprechen würde.

Zumindest wenn die Erfassungsrichtungen mit den Belichtungsrichtungen korrespondieren, ist es bei einer nicht beanspruchten Ausführungsform möglich, die Erfassungsrichtungen so zu wählen, dass zu jeder der Erfassungsrichtungen eine weitere Erfassungsrichtung existiert, die miteinander den Normkonvergenzwinkel der Augen eines menschlichen Betrachters einschließen. Dies führt dazu, dass beispielsweise bei einer Verkippung des Sicherheitshologramms oder Bewegung des Betrachters jeweils um eine Achse senkrecht zu der Ebene, in der die verschiedenen Belichtungsrichtungen liegen, eine Abbildung einmal mit dem linken Auge gemeinsam mit einer weiteren Abbildung, die mit dem rechten Auge wahrgenommen wird, und einmal mit dem rechten Auge gemeinsam mit einer anderen weiteren Abbildung wahrgenommen wird, wobei jeweils durch den menschlichen Betrachter im Gehirn ein dreidimensionales Bild konstruiert wird.

Vorzugsweise umfassen die paarweise rekonstruierten monoskopischen Abbildungen die monoskopischen Abbildungen für drei verschiedene Stereoansichten aus unterschiedlichen Blickrichtungen auf das Objekt. Zu einer Blickrichtung gehören zwei Erfassungsrichtungen, die die Ansichten des rechten und linken Auges eines menschlichen Betrachters wiedergeben. Die monoskopischen Abbildungen können somit beispielsweise jeweils mittels einer Kamera aufgenommen werden.

Alternativ können die unterschiedlichen monoskopischen Abbildungen eines dreidimensionalen Objekts für die verschiedenen Erfassungsrichtungen auch errechnet werden. Unabhängig davon, ob die monoskopische Abbildung mit einer Kamera erfasst wurde oder errechnet wurde, wird die zugehörige Richtung aus der das dreidimensionale Objekt auf der Abbildung gezeigt wird, hier als Erfassungsrichtung bezeichnet.

Bei einer bevorzugten Ausführungsform ist vorgesehen, dass für mindestens eine der Belichtungsrichtungen zwei weitere der Belichtungsrichtungen existieren, die jeweils einen Normkonvergenzwinkel für die menschliche Betrachtung einschließen. Bei einer solchen Ausführungsform, bei der jeder der Belichtungsrichtungen genau eine Abbildung und eine entsprechende Rekonstruktionsrichtung zugeordnet ist, wird beispielsweise zunächst die mit der mindestens einen Rekonstruktionsrichtung (Belichtungsrichtung) verknüpfte rekonstruierte Abbildung mit dem linken Auge des Betrachters erfasst. Mit dem rechten Auge wird eine einer der zwei weiteren Rekonstruktionsrichtungen (Belichtungsrichtungen) zugeordneten rekonstruierten Abbildung erfasst. Aus diesen gemeinsam erfassten Abbildungen wird im menschlichen Betrachter eine dreidimensionale Abbildung des dreidimensionalen Objekts erzeugt. Anschließend wird die Betrachtungsrichtung relativ zu dem Sicherheitshologramm geändert, dass nun die mit der mindestens einen Rekonstruktionsrichtung (Belichtungsrichtung) verknüpfte rekonstruierte Abbildung mit dem rechten Auge des Betrachters erfasst. Mit dem linken Auge wird nun die mit der anderen der zwei weiteren Rekonstruktionsrichtungen (Belichtungsrichtungen) zugeordneten rekonstruierten Abbildung erfasst. Wieder erzeugt der menschliche Betrachter aus den gemeinsam erfassten Abbildungen eine dreidimensionale Abbildung des dreidimensionalen Objekts, jedoch aus einer veränderten Blickrichtung auf das dreidimensionale Objekt.

Hierdurch kann ein kontinuierlicher Übergang bei der Betrachtung des Objekts geschaffen werden. Zum einen ist es möglich, die Abbildungen sukzessive mit dem Objektanteil unter den unterschiedlichen Belichtungsrichtungen in das Aufzeichnungsmaterial aufzuzeichnen. Besonders bevorzugt und zeitlich schneller ist eine Ausführungsform, bei der der Objektanteil in so viele Anteile aufgeteilt wird, wie monoskopische Abbildungen unter den verschiedenen Belichtungsrichtungen in das Sicherheitshologramm belichtet werden und das Belichten der monoskopischen Abbildungen zeitgleich erfolgt. Bei der alternativen Methode werden die monoskopischen Abbildungen zeitversetzt in das Aufzeichnungsmaterial belichtet.

Bei einer Ausführungsform wird der Referenzlichtanteil für alle Objektanteile und somit für alle Abbildungen, die unter den verschiedenen Belichtungsrichtungen in das Hologramm belichtet werden, jeweils identisch, d.h. z. B. aus derselben Richtung eingestrahlt.

Bei einer Rekonstruktion des sich ergebenden Multiplex-Volumenreflexionshologramms wird das Rekonstruktionslicht aus einer Richtung, die der Richtung des bei der Belichtung verwendeten Referenzlichts diametral entgegenrichtet ist eingestrahlt. Es werden alle monoskopischen rekonstruierten Abbildungen rekonstruiert. Bewegt sich der Betrachter in der Ebene der Rekonstruktionsrichtungen, so kann dieser die unterschiedlichen stereoskopischen Ansichten des dreidimensionalen Objekts aus den unterschiedlichen Betrachtungsrichtungen erfassen.

Bei einer anderen Ausführungsform wird für jede Belichtungsrichtung jeweils ein Referenzanteil so eingestrahlt, dass dessen Projektion in die Ebene, die von den Belichtungsrichtungen aufgespannt wird, diametral entgegengerichtet zu dieser Belichtungsrichtung ist, oder einen Winkel, der dem halben Normkonvergenzwinkel entspricht, mit der Belichtungsrichtung einschließt. Dieses bedeutet, dass jeder Belichtungsrichtung die Projektion des Referenzlichts bzw. die Projektion eines Anteils des Referenzlichts jeweils in die Ebene der Belichtungsrichtungen diametral entgegengerichtet ist oder der Blickrichtung/Betrachtungsrichtung entgegengerichtet ist, zu der die Belichtungsrichtung/Rekonstruktionsrichtung und deren zugeordnete Abbildung bzw. rekonstruierte Abbildung gehören.

Wird bei der Rekonstruktion das Referenzlicht aus einer Richtung auf das Volumenreflexionshologramm eingestrahlt, so rekonstruieren mindestens zwei der gespeicherten Abbildungen, so dass ein menschlicher Betrachter hieraus eine stereoskopische Abbildung des dreidimensionalen Objekts erzeugen kann. Wird nun das Volumenreflexionshologramm oder genauer das Aufzeichnungsmaterial, in dem das Volumenreflexionshologramm gespeichert ist, um eine Achse, die senkrecht zu der Ebene der Rekonstruktionsrichtungen ist und vorzugsweise durch das Volumenreflexionshologramm verläuft, verschwenkt, so werden andere der gespeicherten Abbildungen rekonstruiert, dass der menschliche Betrachter, ohne seine Position verändern zu müssen, eine weitere stereoskopische Abbildung des dreidimensionalen Objekts erzeugen kann.

Da bei einer Rekonstruktion eines Volumenhologramms eine Betrachtung und eine Einstrahlung des Rekonstruktionslichts bei einem Volumenreflexionshologramm von derselben Seite des Volumenreflexionshologramm oder des Aufzeichnungsmaterials, in dem das Volumenreflexionshologramm gespeichert ist, erfolgen, wird es bevorzugt, dass das Referenzlicht bzw. jeder Referenzlichtanteil einen von Null verschiedenen Elevationswinkel gegenüber der Ebene aufweist, die von den Belichtungsrichtungen aufgespannt wird. Bei der Projektion/dem Abbilden einer Abbildung in das Hologramm wird jene Richtung als Belichtungsrichtung angesehen, die mit einem Zentralstrahl der Projektion/Abbildung zusammenfällt. Der Elevationswinkel ist vorzugsweise größer als 25°, vorzugsweise im Bereich von 35° bis 65° am bevorzugtesten im Bereich von 45° +/-5°.

Die Ebene der Belichtungsrichtungen ist vorzugsweise senkrecht zur Ebene des Aufzeichnungsmaterials orientiert.

Vorzugsweise ist der Normkonvergenzwinkel für einen Sollbetrachtungsabstand zwischen 30 cm und 50 cm für einen Normaugenabstand von 6,5 cm konstruiert.

Das als Multiplex-Volumenreflexionshologramm ausgebildete Sicherheitshologramm kann erstellt werden, indem jede einzelne der mehreren Abbildungen in einen nur dieser Abbildung zugeordneten flächigen Bereich, vorzugsweise einen streifenförmigen Bereich, des Aufzeichnungsmaterials gespeichert wird. Für jede Abbildung kann somit die optimale Beugungseffizienz des holografischen Aufzeichnungsmaterials genutzt werde und die einzelnen Abbildungen daher kontrastreich ausgebildet werden. Werden die Bereiche zu schmal oder flächig zu klein, kann dieses das Betrachtungsempfinden der stereoskopischen Abbildungen beeinträchtigen.

Sehr viel schwieriger nachzubilden sind Ausführungsformen, bei den die mehreren Abbildungen flächig in denselben Bereich des Aufzeichnungsmaterials belichtet werden oder sind. Die zur Verfügung stehende Beugungseffizienz muss zwischen den mehreren Abbildungen "aufgeteilt" werden. Insgesamt sind die stereoskopischen Abbildungen etwas kontrastschwächer. Es entstehen jedoch nicht die durch Streifen oder kleine flächige Bereiche verursachten negativen Betrachtungsempfindungen, die bei der zuvor beschriebenen Ausführungsform auftreten können. Insgesamt wirken die stereoskopischen Abbildungen etwas schwächer von der Sichtbarkeit. Zudem erfolgt die Belichtung aller der mehreren Abbildungen vorzugsweise zeitgleich, was den Fertigungsprozess deutlich beschleunigt. Fehlbelichtungen aufgrund von zeitlichen Intensitätsschwankungen des Belichtungslichtes sind minimiert. Möglich sind jedoch auch zeitversetzte Belichtungen.

Manche Ausführungsformen sehen vor, das holografische Aufzeichnungsmaterial in unterschiedliche flächige Bereiche, insbesondere Streifen aufgeteilt ist. In jeden flächigen Bereich, beispielsweise Streifen, werden oder sind mindestens zwei der mehreren Abbildungen gespeichert. Hierdurch kann bei gleicher Anzahl der Bereiche, beispielsweise Streifen, in die das Aufzeichnungsmaterial unterteilt wird oder ist, eine größere Anzahl von monoskopischen Abbildungen gespeichert werden. Die Anzahl der mehreren Abbildungen kann somit bei gleichbleibender Anzahl an flächigen Bereichen gesteigert werden. Alternativ können die flächigen Bereiche bei gleichbleibender Anzahl der mehreren Abbildungen größer gewählt werden. Dieses reduziert die negativen Betrachtungsempfindungen, die durch kleine flächige Bereiche oder Streifen verursacht werden. Ferner kann, wenn beispielsweise immer mindestens zwei der mehreren Abbildungen in einen flächigen Bereich, beispielsweise Streifen, zeitgleich belichtet werden, sichergestellt werden, dass beide Teilbilder (Abbildungen) optimal für die spätere Wahrnehmung der stereoskopischen Abbildung belichtet sind. Belichtungsintensitätsschwankungen zwischen den zwei monoskopischen Abbildungen, die zu einer stereoskopischen Abbildung gehören, können hierbei nicht auftreten.

Nachfolgend wird die Erfindung unter Bezugnahme auf eine Zeichnung näher erläutert. Hierbei zeigen:
- Fig. 1: eine schematische Darstellung zur Erfassung von monoskopischen Abbildungen eines Objekts;
- Fig. 2: eine schematische Darstellung zur Erläuterung der Belichtung von verschiedenen monoskopischen Abbildungen in ein Hologramm;
- Fig. 3: eine weitere schematische Darstellung zur Erläuterung der Belichtung von monoskopischen Abbildungen in ein Hologramm;
- Fig. 4: eine schematische Darstellung der Rekonstruktion eines Hologramms; und
- Fig. 5: eine weitere schematische Darstellung der Rekonstruktion eines Hologramms.

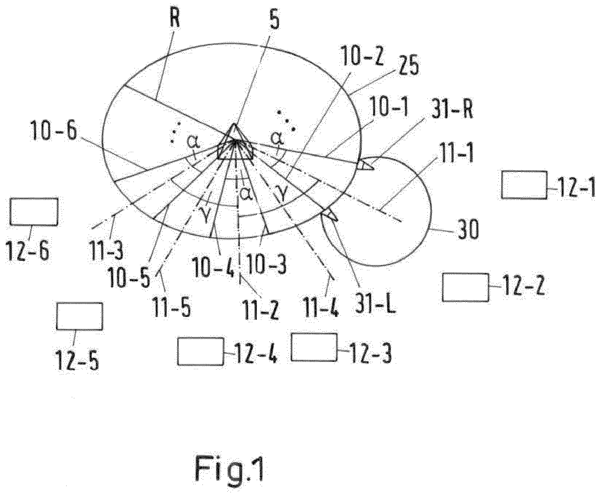

In Fig. 1 ist schematisch dargestellt, wie von einem Objekt 5 verschiedene monoskopische Abbildungen 12-1 bis 12-6 erfasst werden. Das Objekt 5 bildet den Mittelpunkt eines Kreises 25 mit einem Radius R. Betrachtet ein menschlicher Betrachter das Objekt 5, während er sich auf dem Kreis 25 befindet, beispielsweise unter einer Blickrichtung 11-1, so erfassen ein rechtes Auge 31-1 und ein linkes Auge 31-2 das Objekt unter leicht unterschiedlichen Erfassungsrichtungen 10-1 bzw. 10-2. Die Erfassungsrichtungen schließen einen sogenannten Konvergenzwinkel α ein. Das menschliche Gehirn ist in der Lage, ausgehend von den mit den Augen 31-1, 31-2 erfassten monoskopischen Abbildungen das Objekt 5 dreidimensional einschließlich seiner Tiefe zu konstruieren. Erfasst man an den Positionen, an denen sich die Augen befinden, d.h. unter der Erfassungsrichtung 10-1 und der Erfassungsrichtung 10-2, jeweils mit einer nicht dargestellten Erfassungsvorrichtung, z.B. einer Kamera, eine monoskopische Abbildung 12-1 bzw. 12-2, so ist es möglich, das Objekt genauso dreidimensional wahrzunehmen, wenn das rechte Auge die Abbildung 12-1 und die linke Auge die Abbildung 12-2 erfasst. Dieser Effekt wird auch als Stereoskopie bezeichnet.

Um das dreidimensionale Objekt 5 mit Hilfe von monoskopischen Abbildungen 12-x für unterschiedliche Blickrichtungen 11-x zu speichern, werden für die unterschiedlichen Blickrichtungen 11-x, hier 11-1, 11-2, 11-3, jeweils zwei monoskopische Abbildungen, hier 12-1 bis 12-6, erfasst, die jeweils paarweise Erfassungsrichtungen zugeordnet sind, die einen Konvergenzwinkel α eines menschlichen Betrachters 30 einschließen. Die Anzahl der erfassten monoskopischen Abbildungen ist hier nur exemplarisch gewählt. Sind die Blickrichtungen so gewählt, dass ein Winkel γ zwischen benachbarten Blickrichtungen dem doppelten Konvergenzwinkel α entspricht, so kann bei einer nicht beanspruchten Ausführungsform mit der für die eine Blickrichtung 11-1 erfasste Abbildung 10-2, welche für das linke Auge zu der Blickrichtung 11-1 erfasst ist, gemeinsam mit der Abbildung 10-3, welche für die Blickrichtung 11-2 für das rechte Auge erfasst ist, eine stereoskopische Ansicht für eine Blickrichtung 11-4 erzeugt werden, indem nun die monoskopische Abbildung 12-2 für das rechte Auge und die monoskopische Abbildung 12-3 für das linke Auge genutzt werden. Bei geschickter Wahl der Blickrichtungen können somit die meisten monoskopischen Abbildungen zum Erzeugen stereoskopischer Ansichten für zwei Blickrichtungen verwendet werden. Sichergestellt ist jedoch, dass die Erfassungsrichtungen 10-1 bis 10-6 jeweils paarweise den Konvergenzwinkel α für einen menschlichen Betrachter auf dem Kreis 25 einschließen und somit die diesen Erfassungsrichtungen 12-1 bis 12-6 entsprechend zugeordneten erfassten monoskopischen Abbildungen 12-1 bis 12-6 jeweils paarweise zur Erzeugung einer stereoskopischen Ansicht genutzt werden können.

Die monoskopischen Abbildungen 12-x, die Erfassungsrichtungen 10-x zugeordnet sind, können auch auf andere Weise erzeugt werden, beispielsweise mittels eines Computers für das dreidimensionale Objekt 5 errechnet werden. Obwohl in einem solchen Fall die Abbildungen nicht "erfasst", sondern errechnet werden, wird die zugeordnete Richtung, aus der das dreidimensionale Objekt 5 dargestellt ist, als Erfassungsrichtung bezeichnet. Das Erfassen einer monoskopischen Abbildung soll im Folgenden auch immer das Errechnen der monoskopischen Abbildung mit umfassen.

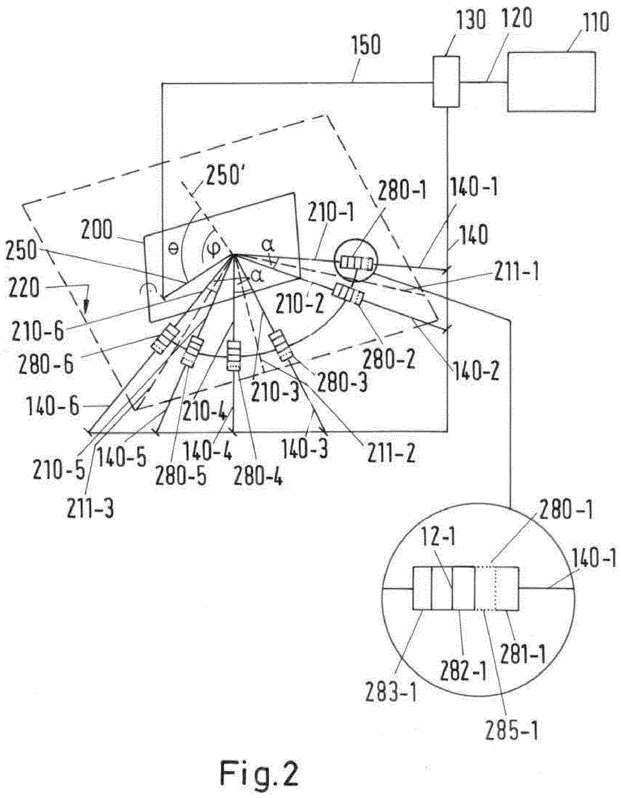

In Fig. 2 ist schematisch eine Vorrichtung gezeigt, mit der die verschiedenen monoskopischen Abbildungen 12-1 bis 12-6 zum Ausbilden eines Multiplex-Volumenreflexionshologramm verwendet werden können. Die Vorrichtung 100 umfasst eine Lichtquelle 110 zum Erzeugen kohärenten Lichts 120. In einem Strahlteiler 130 wird das kohärente Licht 120 in einen Objektanteil 140 und einen Referenzanteil 150 geteilt. Der Objektanteil 140 und der Referenzanteil 150 werden von entgegengesetzten Richtungen auf ein holografisches Aufzeichnungsmaterial 200 geführt, welches in einer Halterung 205 angeordnet ist. Sowohl der Referenzanteil 150 und der Objektanteil 140 durchstrahlen das holografische Aufzeichnungsmaterial 200 und interferieren, wodurch anhand der Interferenzstrukturen ein Volumenreflexionshologramm jeweils für die unterschiedlichen Belichtungsrichtungen 210-x erzeugt wird. Die unterschiedlichen Belichtungsrichtungen 210-x liegen alle in derselben Ebene 220, welche in der dargestellten Ausführungsform senkrecht zur Ebene des flach ausgebildeten holografischen Aufzeichnungsmaterials orientiert ist. Jeweils paarweise schließen die Belichtungsrichtungen 210-1, 210-2; 210-3, 210-4; 210-5, 210-6 einen Normkonvergenzwinkel α ein, sodass ein menschlicher Betrachter des Hologramms bei der Rekonstruktion unter einem geeignet gewählten Betrachtungsabstand für unterschiedliche Betrachtungsrichtungen 211-x stereoskopische Abbildungen des in den monoskopischen Abbildungen 12-1 bis 12-6 dargestellten Objekts erfassen kann.

Bei einer nicht beanspruchten Ausführungsform ist die Lage der Belichtungsrichtungen 210-1 bis 210-6 in der Ebene 220 analog der Lage der Erfassungsrichtungen 10-1 bis 10-6 bei der Erfassung der monoskopischen Abbildungen 12-1 bis 12-6 gewählt.

Bei der in Fig. 2 dargestellten Ausführungsform wird das Referenzlicht 250 unter einem Elevationswinkel θ gegenüber der Ebene 220, die von den Belichtungsrichtungen 210-x aufgespannt wird, auf das holografische Aufzeichnungsmaterial 200 jedoch für alle Belichtungsrichtungen identisch eingestrahlt. Eine Projektion 250'des Referenzlichts in die Ebene 220, welche von den Belichtungsrichtungen 210-x aufgespannt ist, schließt ein Azimutwinkel φ mit der Ebene des Aufzeichnungsmaterials 200 ein. Der Azimutwinkel φ beträgt vorzugsweise 90°, der Elevationswinkel θ beispielsweise 45°. Die von den Belichtungsrichtungen 210-x aufgespannte Ebene 220 ist vorzugsweise senkrecht zur Ebene des Aufzeichnungsmaterials orientiert.

Der Objektanteil 140 des kohärenten Lichts 120 wird jeweils verwendet, um die einzelnen monoskopischen Abbildungen 12-1 bis 12-6 in das Aufzeichnungsmaterial 200 zu projizieren. Hierzu sind eine Projektionsvorrichtung 280 oder, wie hier dargestellt, mehrere Projektionsvorrichtungen 280-x vorgesehen. Diese umfassen jeweils eine Ausleuchtoptik 281-x, eine Halterung 282-x, in der die monoskopische Abbildung 12-x gehaltert ist, und eine Projektionsoptik 283-x. Sind die monoskopischen Abbildungen 12-x digital erfasst, so kann anstelle der Halterung 282-x mit dem monoskopischen Bild 12-x ein digitaler räumlicher Lichtmodulator 285-x vorgesehen sein, beispielsweise ein LCD-Schirm. Ein digitaler räumlicher Lichtmodulator 285-x kann auch gemeinsam mit der Halterung 282-x und der Abbildung 12-x vorhanden sein, um die Projektion der Abbildung 12-x zu individualisieren, um mit denselben Abbildungen 12-x dennoch eine große Anzahl verschiedener Multiplex-Volumenreflexionshologramme als Sicherheitselemente 202 herstellen zu können.

In der dargestellten Ausführungsform wird der Objektanteil 140 des kohärenten Lichts 120 in so viele Anteile 140-1 bis 140-6 aufgeteilt, wie monoskopische Abbildungen zeitgleich in das holografische Aufzeichnungsmaterial unter den verschiedenen Belichtungsrichtungen 210-1 bis 210-6 belichtet werden. Alternativ ist es möglich, die unterschiedlichen monoskopischen Abbildungen 12-1 bis 12-6 unter den unterschiedlichen Belichtungsrichtungen 210-1 bis 210-6 zeitlich nacheinander in das Aufzeichnungsmaterial 200 zu belichten.

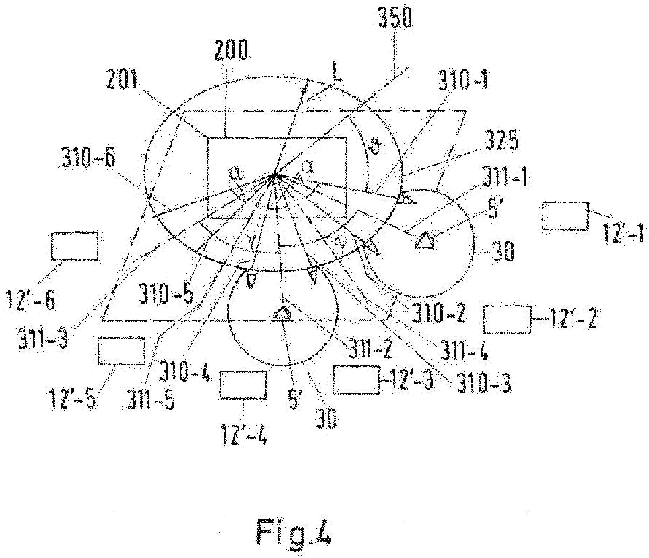

In Fig. 4 ist die Rekonstruktion des Sicherheitshologramms 201, welches sich aus dem entwickelten Aufzeichnungsmaterial 200 ergibt, dargestellt. Rekonstruktionslicht 350 wird in einer Richtung eingestrahlt, die entgegengesetzt der Richtung ist, unter der das zur Aufzeichnung verwendete Referenzlicht 150 auf das Aufzeichnungsmaterial auftraf. Das Hologramm rekonstruiert nun unter den verschiedenen Rekonstruktionsrichtungen 310-1 bis 310-6 die in dem Hologramm gespeicherten Abbildungen 12-1 bis 12-6 als rekonstruierte Abbildungen 12'-1 bis 12'-6, wobei jeweils zwei Rekonstruktionsrichtungen 310-1, 310-2; 310-3, 310-4; 310-5, 310-6 paarweise einen Normkonvergenzwinkel α einschließen, der einem Normkonvergenzwinkel für die Betrachtung aus einem Sollabstand L zu dem Hologramm entspricht. Bewegt ein Betrachter somit seinen Kopf auf einem Kreissegment 325, so kann der Benutzer aus unterschiedlichen Betrachtungsrichtungen 311-1, 311-2, 311-3 das in den Abbildungen 12'-1 bis 12'-6 gespeicherte Objekt 5' jeweils stereoskopisch wahrnehmen. Sind die Belichtungsrichtungen für die erfassten monoskopischen Abbildungen 12-1 bis 12-6 geschickt gewählt, so gibt es zusätzlich zu den drei Betrachtungsrichtungen 311-1 bis 311-3 auch noch weitere Betrachtungsrichtungen 311-4, 311-5, die eine stereoskopische Wahrnehmung mit den rekonstruierten Abbildungen 12'-2, 12'-3 bzw. 12'-4 und 12'-5 ermöglichen.

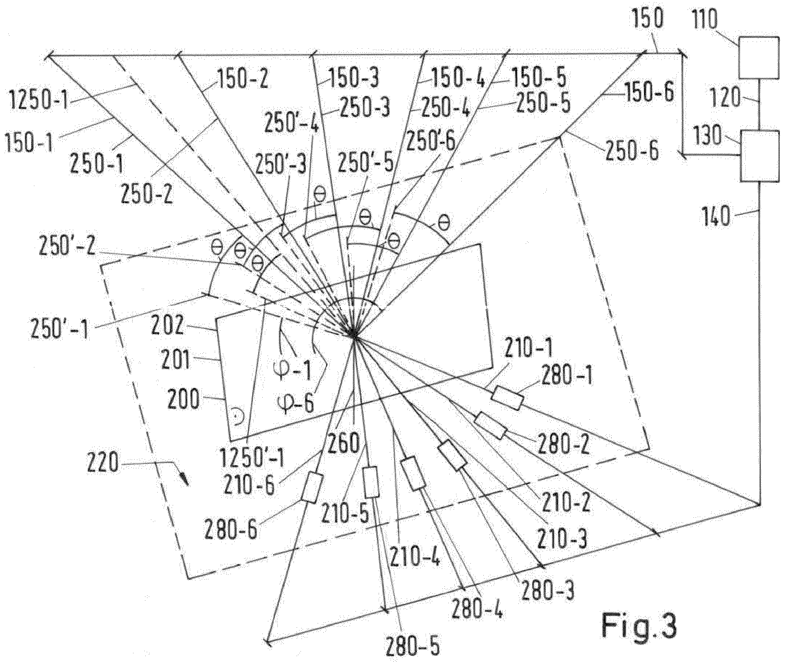

In Fig. 3 ist eine alternative Möglichkeit zur Herstellung eines Sicherheitshologramms 201, welches ein Multiplex-Volumenreflexionshologramm ist, dargestellt. Gleiche technische Merkmale sind in den Figuren mit denselben Bezugszeichen versehen und nicht erneut detailliert beschrieben. Diese Ausführungsform unterscheidet sich dadurch, dass auch der Referenzanteil für die Belichtung der einzelnen Abbildungen 12-1 bis 12-6 jeweils so eingestrahlt wird, dass eine Projektion in die Ebene 220 des entsprechenden Referenzanteils 150-x der entsprechenden Belichtungsrichtung diametral entgegengerichtet ist.

Bei einer Ausführungsform wird der Referenzanteil des kohärenten Lichts 120 in Anteile 150-1 bis 150-6 aufgeteilt und die Belichtung aller monoskopischen Abbildungen 12-1 bis 12-6 zeitgleich durchgeführt. Bevorzugt wird bei dieser Ausführungsform jedoch, dass die einzelnen Abbildungen 12-1 bis 12-6 jeweils sequenziell so einbelichtet werden, dass während der Belichtung der monoskopischen Abbildung 12-1 aus der Belichtungsrichtung 210-1 der Referenzanteil 150-1 als Referenzlicht eingestrahlt wird. Zur Belichtung der monoskopischen Abbildung 12-2 unter der Belichtungsrichtung 210-2 wird entsprechend das Referenzlicht aus der Richtung 250-2 eingestrahlt, dessen Projektion 250'-2 der Belichtungsrichtung 210-2 diametral entgegengerichtet ist.

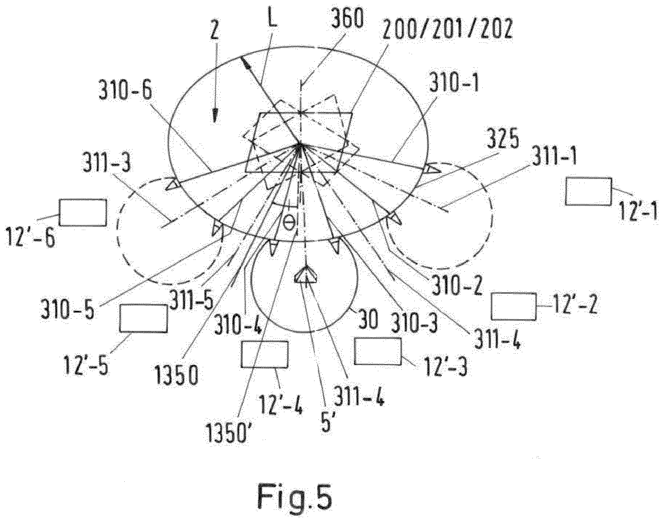

Alternativ ist es möglich die Einstrahlung des Referenzanteils 1150-1 des Lichts entlang einer Richtung 1250-1 so zu gestalten, dass dessen Projektion 1250'-1 in die Ebene der Belichtungsrichtungen 10-x diametral zu der späteren Betrachtungsrichtung 311-1 (vergl. Fig. 5) bzw. der Blickrichtung 11-1 entgegengerichtet ist, aus der die belichteten monoskopischen Abbildungen 12-2, 12-1 bei der Rekonstruktion als stereoskopisch erfassbar sind.

Für eine Richtung 1250-1 des Referenzlichtanteils 1150-1 können dann zeitgleich oder zeitversetzt zwei monoskopische Abbildungen, die monoskopische Abbildung 12-1 aus der Belichtungsrichtung 10-1 und die monoskopische Abbildung 12-2 aus der Belichtungsrichtung 10-2, in das Aufzeichnungsmaterial belichtet werden. Diese Belichtungsrichtungen einen Normkonvergenzwinkel α für einen menschlichen Betrachter ein. Die Projektion 1250'-1 des Referenzlichtanteils 1150-1 ist in diesem Falle der Blickrichtung bzw. der Betrachtungsrichtung 311-1 diametral gewählt unter der die beiden rekonstruierten monoskopischen Abbildung 12'- 1 und 12'-2 als stereoskopische Abbildung durch einen menschlichen Betrachter 30 bei der Rekonstruktion und Verifikation des Sicherheitselements 202 wahrnehmbar ist (vergl. Fig. 5).

Die weiteren Abbildungen, hier 12-3 bis 12-6, können mit denselben Projektionsvorrichtungen 280-1, 280-2, bei Austausch der entsprechenden Abbildungen, in das Aufzeichnungsmaterial 200 belichtet werden, indem das Aufzeichnungsmaterial um eine Achse 260, die senkrecht zu den Belichtungsrichtungen 210-1, 210-2 orientiert ist, beispielsweise bei einer nicht beanspruchten Variante um einen Winkel γ, welcher dem Winkel zwischen den Blickrichtungen 11-x bei der Erfassung der monoskopischen Abbildungen entspricht, gedreht wird.

Die Rekonstruktion dieses als Sicherheitshologramms 201 ausgebildeten Sicherheitselements 202, welches sich nach dem Entwickeln und Fixieren des Aufzeichnungsmaterials ergibt, ist in Fig. 5 schematisch dargestellt. Das entwickelte Aufzeichnungsmaterial ist eine Hologrammschicht 200. Das Rekonstruktionslicht wird aus einer vorgegebenen Rekonstruktionslichtrichtung 1350 auf das Sicherheitshologramm 201 eingestrahlt, dessen Projektion 1350' in die Ebene 200 der Rekonstruktionsrichtungen 310-x ebenfalls dargestellt ist, und aus einer Betrachtungsrichtung, beispielsweise 311-2, betrachtet, sodass die Rekonstruktionsrichtung 310-3, 310-4 eine stereoskopische Ansicht des Objekts 5 ähnlich der Betrachtung aus der Blickrichtung 11-2 (vgl. Fig. 1) für den menschlichen Betrachter ergibt, der die rekonstruierte Abbildung 12-3 mit dem rechten Auge und die rekonstruierte Abbildung 12-4 mit dem linken Auge erfasst. Wird nun das Sicherheitshologramm um eine Achse 360, die in der Ebene des Sicherheitshologramms 201 liegt und senkrecht zu der Ebene orientiert ist, in der die Rekonstruktionsrichtungen 310-x liegen, so werden bei einem Verkippen nach links die rekonstruierten monoskopischen Abbildungen 12'-1 und 12'-2 in das rechte bzw. linke Auge rekonstruiert, sodass eine stereoskopische Ansicht ähnlich zu der, die sich bei der Blickrichtung 11-1 (vgl. Fig. 1) ergibt, für den menschlichen Betrachter als stereoskopische Ansicht ergibt. Ein Verkippen nach rechts führt dazu, dass entsprechend einer Ansicht ähnlich zu der Blickrichtung 11-3 als stereoskopische Ansicht der rekonstruierten Abbildungen 12-5', 12-6' entsteht.

Bei den hier dargestellten Ausführungsformen sind jeweils monoskopische Abbildungen für drei, gegebenenfalls fünf, Blickrichtungen bzw. Betrachtungsrichtungen des rekonstruierten Hologramms beschrieben. Es versteht sich, dass wesentlich mehr unterschiedliche Blickrichtungen bzw. Betrachtungsrichtungen, unter denen eine stereoskopische Wahrnehmung des Objekts für den Betrachter möglich ist, in das Hologramm kopiert werden können. Ebenso ist es möglich, die Belichtungswinkel so zu wählen, dass sie nicht unmittelbar mit den Erfassungsrichtungen korrespondieren. Hierdurch ist es möglich, beispielsweise eine vollständige Rundumansicht des Objekts 5 mittels monoskopischer Abbildungen aufzunehmen oder zu errechnen und sämtliche Ansichten so in das Hologramm zu belichten, dass beim Übergang von einer Betrachtungsrichtung zur nächsten Betrachtungsrichtung eine "Objektdrehung" im Raum wahrgenommen wird, die von der tatsächlichen Änderung der Betrachtungsposition bzw. Änderung der Betrachtungsrichtung abweicht. Hierdurch ist es möglich, dreidimensionale Effekte zu erzielen, die mit reinen 3D-Hologrammen, die mit Parallaxe in ein Volumenreflexionshologramm belichtet werden, deutlich abweichen. Solche Sicherheitshologramme können durch mit Parallaxe aufgezeichnete Volumenreflexionshologramme nicht nachgebildet werden.

Bei den beschriebenen Ausführungsformen können die einzelnen Abbildungen jeweils in unterschiedliche flächige Bereiche, insbesondere gleichbreite Streifen, belichtet werden oder sein oder einander flächig überlappend in denselben Bereich des Aufzeichnungsmaterials belichtet werden oder sein. Ebenso ist es möglich, dass in verschiedene flächige Bereiche, vorzugsweise Streifen, jeweils mehrere der Abbildungen gespeichert werden oder sind, in verschiedene Streifen jedoch verschiedene der mehreren Abbildungen. Jede der mehreren Abbildungen wird vorzugsweise nur in einen flächigen Bereich belichtet.

Eine Ausführungsform sieht vor, dass in jeden der Streifen zwei der mehrere Abbildungen belichtet sind oder werden.

Andere Ausführungsformen sehen vor, das in jeden der Bereiche, vorzugsweise jeden der Streifen, des Aufzeichnungsmaterials mehr als zwei der mehreren Abbildungen, beispielsweise drei, der mehreren Abbildungen belichtet und gespeichert werden oder sind. Bei einigen der sich ergebenden stereoskopische Abbildungen sind beide monoskopischen Abbildungen in demselben flächigen Bereich, z. B. Streifen, gespeichert, bei anderen stereoskopischen Abbildungen sind die monoskopischen Abbildungen in verschiedenen, vorzugsweise benachbarten, flächigen Bereichen, vorzugsweise Streifen, gespeichert.

Vorzugsweise werden oder sind Abbildungen, die gemeinsam eine stereoskopische Abbildung ausbilden, wenn diese nicht in demselben Volumenbereich bzw. flächigen Bereich des Aufzeichnungsmaterials gespeichert sind oder werden, in benachbarte Bereiche, vorzugsweise benachbarte Streifen, belichtet.

### Bezugszeichenliste

- 5,: Objekt
- 5': stereoskopisch wahrgenommenes Objekt
- 10-x: Erfassungsrichtung x
- 11-x: Blickrichtung x
- 12-x: monoskopische Abbildung x
- 12-x': rekonstruierte monoskopische Abbildung x
- 20: Ebene
- 25: Erfassungskreis
- 30: menschlicher Betrachter
- 31: rechtes Auge
- 32: linkes Auge
- α: Konvergenzwinkel
- R: Radius
- γ: Winkel zwischen zwei Blickrichtungen
- 100: Vorrichtung
- 110: Lichtquelle
- 120: kohärentes Licht
- 130: Strahlteiler
- 140, 140-x: Objektanteil
- 150, 150-x: Referenzanteil
- 200: Aufzeichnungsmaterial/Hologrammschicht
- 201: Sicherheitshologramm
- 202: Sicherheitselement
- 205: Halterung
- 210-x: Belichtungsrichtung
- 211-x: Betrachtungsrichtung
- 220: Ebene der Belichtungsrichtungen
- 250, 250-x: Referenzanteilrichtung/Richtung des Referenzlichts
- 250', 250'-x: Projektion der Referenzanteilrichtung in die Ebene 220
- θ: Elevationswinkel
- φ: Azimutwinkel
- 260: Achse
- 280, 280-x: Projektionsvorrichtung x
- 281-x: Ausleuchtoptik
- 282-x: Halterung
- 283-x: Abbildungsoptik x/ Projektionsoptik
- 285-x: räumlicher Lichtmodulator
- 310-x: Rekonstruktionsrichtung
- 311-x: Betrachtungsrichtung
- 325: Kreissegment
- 350: Rekonstruktionslicht
- 360: Achse
- 1150-x: Referenzlichtanteil x
- 1250-x: Referenzlichtrichtung x
- 1250'-x: Projektion der Referenzlichtrichtung x in die Ebene 220
- 1350: Rekonstruktionslichtrichtung
- 1350': Projektion der Rekonstruktionslichtrichtung in die Ebene der Rekonstruktionsrichtungen

## Patentansprüche

1. Verfahren zum Herstellen eines Sicherheitshologramms (201) umfassend die Schritte:
Bereitstellen von mehreren, mindestens drei, monoskopischen Abbildungen (12-x) eines dreidimensionalen Objekts (5) aus unterschiedlichen Erfassungsrichtungen (10-x), wobei jeder der mehreren Abbildungen (12-x) genau eine der unterschiedlichen Erfassungsrichtungen (10-x) zugeordnet ist;
Bereitstellen eines holografischen Aufzeichnungsmaterials (200);
Erzeugen kohärenten Lichts (120) und Aufteilen des kohärenten Lichts (120) in mindestens einen Referenzanteil (150; 150-x) und mindestens einen Objektanteil (140; 140-x);
und Führen des mindestens einen Referenzanteils (150; 150-x) und des mindestens einen Objektanteils (140; 140-x), so dass der mindestens eine Objektanteil (140'; 140-x) und der mindestens einen Referenzanteil (150; 150-x) das Aufzeichnungsmaterial (200) von entgegengesetzten Seiten durchstrahlen und im Inneren des Aufzeichnungsmaterials (200) interferieren,
wobei mittels des mindestens einen Objektanteils (140; 140-X) die mehreren Abbildungen (12-x) unter verschiedenen Belichtungsrichtungen (210-x) bezüglich des Aufzeichnungsmaterials (200) projiziert werden, wobei jeder der mehreren Abbildungen (12-x) genau eine der verschiedenen Belichtungsrichtungen (210-x) zugeordnet ist,
wobei die Belichtungsrichtungen (210-x) alle in einer Ebene liegen und zumindest paarweise einen Normkonvergenzwinkel (α) für eine menschliche Betrachtung aus einem Normabstand einschließen und einer Betrachtungsrichtung zuordenbar sind, so dass für einen menschlichen Betrachter mit einem Normaugenabstand bei einer Rekonstruktion ein stereoskopischer Effekt aus der Betrachtungsrichtung wahrnehmbar ist,
**dadurch gekennzeichnet, dass**
ein Winkel (γ ) zwischen zwei Blickrichtungen (11-x), für die jeweils aus zwei, jeweils einen Normkonvergenzwinkel (α) einschließenden der unterschiedlichen Erfassungsrichtungen (10-x) ein eine stereoskopische Abbildung verkörperndes Paar monoskopischer Abbildungen (12-x) erfasst ist, größer als ein Winkel zwischen den zugehörigen Betrachtungsrichtungen (211-x) ist, die mit den die entsprechenden Paare der monoskopischen Abbildungen belichtenden Belichtungsrichtungen (210-x) korrespondieren.

2. Verfahren nach Anspruch 1, **dadurch gekennzeichnet, dass** die monoskopischen Abbildungen (12-x) die monoskopischen Abbildungen (12-x) für mindestens drei verschiedene Stereoansichten aus unterschiedlichen Blickrichtungen (11-x) des dreidimensionalen Objekts (5) umfassen.

3. Verfahren nach einem der Ansprüche 1 oder 2, **dadurch gekennzeichnet, dass** für mindestens eine der Belichtungsrichtungen (210-x) zwei andere der Belichtungsrichtungen (210-x) existieren, die jeweils mit der mindestens einen Belichtungsrichtung (210-x) den Normkonvergenzwinkel (α) für eine menschliche Betrachtung einschließen.

4. Verfahren nach einem der Ansprüche 1 bis 3, **dadurch gekennzeichnet, dass** der mindestens eine Objektanteil (140-x) in so viele Anteile aufgeteilt wird, wie monoskopische Abbildungen (12-x), die mittels der Anteile projiziert werden, unter den verschiedenen Belichtungsrichtungen in das Sicherheitshologramm belichtet werden, und das Belichten der monoskopischen Abbildungen zeitgleich erfolgt.

5. Verfahren nach einem der Ansprüche 1 bis 3, **dadurch gekennzeichnet, dass** die monoskopischen Abbildungen (12-x) zeitversetzt oder paarweise zeitversetzt in das Aufzeichnungsmaterial belichtet werden.

6. Verfahren nach einem der Ansprüche 1 bis 5, **dadurch gekennzeichnet, dass** der Normkonvergenzwinkel für einen Sollbetrachtungsabstand zwischen 30 cm und 50 cm als Normbetrachtungsabstand für einen Normaugenabstand von 6,5 cm konstruiert ist.

7. Sicherheitshologramm 201, welches als Multiplex-Volumenhologramm in einer Hologrammschicht (200) ausgebildet ist, in das mehrere, mindestens drei, monoskopische Abbildungen (12-x) desselben dreidimensionalen Objekts (5) belichtet sind, die das dreidimensionale Objekt (5) aus unterschiedlichen Erfassungsrichtungen (10-x) abbilden, und bei Einstrahlung von Referenzlicht (350) auf die Hologrammschicht die mehreren monoskopischen rekonstruierten Abbildungen (12'-x) unter verschiedenen Rekonstruktionsrichtungen (310-x) bezüglich der Hologrammschicht (200) rekonstruieren, wobei jeder der mehreren rekonstruierten monoskopischen Abbildungen (12'-x) genau und eindeutig eine der verschiedenen Rekonstruktionsrichtungen (310-x) zugeordnet ist, wobei die Rekonstruktionsrichtungen (310-x) alle in einer Ebene liegen und zumindest paarweise einen Normkonvergenzwinkel (α) für eine menschliche Betrachtung einschließen, so dass für einen menschlichen Betrachter ein stereoskopischer Effekt aus einer von verschiedenen Betrachtungsrichtungen wahrnehmbar ist, **dadurch gekennzeichnet, dass** ein Winkel (γ ) zwischen zwei Blickrichtungen (11-x), für die aus zwei, jeweils einen Normkonvergenzwinkel (α) einschließenden der unterschiedlichen Erfassungsrichtungen (10-x) ein eine stereoskopische Abbildung verkörperndes Paar monoskopischer Abbildungen (12-x) erfasst ist, größer als ein Winkel zwischen den zugehörigen Betrachtungsrichtungen (211-x) ist, unter denen die entsprechenden Paare der monoskopischen Abbildungen rekonstruieren, die mit den zwei Blickrichtungen (11-x) korrespondieren.

8. Sicherheitshologramm nach Anspruch 7, **dadurch gekennzeichnet, dass** die mehreren monoskopischen Abbildungen (12-x) die monoskopischen Abbildungen (12-x) für mindestens drei verschiedene Betrachtungsrichtungen (311-x) zum erzeugen stereoskopischer Ansichten des dreidimensionalen Objekts (5) umfassen.

## Claims

1. Method for producing a security hologram (201) comprising the steps:
providing multiple, at least three, monoscopic images (12-x) of a three-dimensional object (5) from different capture directions (10-x), each of the multiple images (12-x) being associated with exactly one of the different capture directions (10-x); providing a holographic recording material (200); generating coherent light (120) and splitting the coherent light (120) into at least one reference portion (150; 150-x) and at least one object portion (140; 140-x);
and guiding the at least one reference portion (150; 150-x) and the at least one object portion (140; 140-x) so that the at least one object portion (140; 140-x) and the at least one reference portion (150; 150-x) pass through the recording material (200) from opposite sides and interfere inside the recording material (200), wherein, by means of the at least one object portion (140; 140-x) the multiple images (12-x) are projected under different exposure directions (210-x) with respect to the recording material (200), wherein each of the multiple images (12-x) is assigned exactly one of the different exposure directions (210-x),
wherein
the exposure directions (210-x) all lie in one plane and at least in pairs enclose a standard convergence angle (α) for human viewing from a standard distance and can be assigned to a viewing direction, so that for a human viewer with a standard eye distance,
upon reconstruction a stereoscopic effect is perceptible from the viewing direction, **characterized in that**
an angle (y) between two viewing directions (11-x), for each of which from two of the different capture directions (10-x) enclosing a standard convergence angle (α) a pair of monoscopic images (12-x) embodying a stereoscopic view is captured, is greater than an angle between the associated sighting directions (211-x), that correspond to the exposure directions (210-x) exposing the corresponding pairs of monoscopic images.

2. Method according to claim 1, **characterized in that** the monoscopic images (12-x) comprise the monoscopic images (12-x) for at least three different stereo views from different viewing directions (11-x) of the three-dimensional object (5).

3. Method according to one of claims 1 or 2, **characterized in that** for at least one of the exposure directions (210-x) two other exposure directions (210-x) exist, all of which together with the at least one exposure direction (210-x) enclose the standard convergence angle (α) for human viewing.

4. Method according to one of claims 1 to 3, **characterized in that** the at least one object portion (140-x) is divided into as many portions as monoscopic images (12-x) projected by means of the portions are exposed into the security hologram under the different exposure directions, and the exposure of the monoscopic images takes place simultaneously.

5. Method according to one of claims 1 to 3, **characterized in that** the monoscopic images (12-x) are exposed into the recording material time shifted or pairwise time shifted.

6. Method according to one of claims 1 to 5, **characterized in that** the standard convergence angle for a target viewing distance between 30 cm and 50 cm as the standard viewing distance is designed for a standard eye distance of 6,5 cm.

7. Security hologram 201, which is formed as a multiplex volume hologram in a hologram layer (200), into which multiple, at least three, monoscopic images (12-x) of the same three-dimensional object (5) are exposed, which depict the three-dimensional object (5) from different capture directions (10-x), and when reference light (350) is irradiated onto the hologram layer reconstruct the multiple reconstructed monoscopic images (12'-x) under different reconstruction directions (310-x) relative to the hologram layer (200), wherein to each of the multiple reconstructed monoscopic images (12'-x) precisely and uniquely one of the different reconstruction directions (310-x) is assigned, wherein the reconstruction directions (310-x) all lie in one plane and at least pairwise enclose a standard convergence angle (α) for human viewing, so that a stereoscopic effect is perceptible for a human viewer from one of different sighting directions, **characterized in that** an angle (y) between two viewing directions (11-x), for each of which from two of the different capture directions (10-x) enclosing a standard convergence angle (α) a pair of monoscopic images (12-x) embodying a stereoscopic image is captured, is greater than an angle between the associated sighting directions (211-x), under which the corresponding pairs of monoscopic images reconstruct, that correspond to the two viewing directions (11-x).

8. Security hologram according to claim 7, **characterized in that** the multiple monoscopic images (12-x) comprise the monoscopic images (12-x) for at least three different viewing directions (311-x) for generating stereoscopic views of the three-dimensional object (5).

## Revendications

1. Procédé de production d'un hologramme de sécurité (201) comprenant les étapes suivantes:
fournir plusieurs, au moins trois, images monoscopiques (12-x) d'un objet tridimensionnel (5) depuis de différentes directions de capture (10-x), chacune des plusieurs images (12-x) étant associée à exactement une des différentes directions de capture (10-x); fournir un matériau d'enregistrement holographique (200) ; générer une lumière cohérente (120) et diviser la lumière cohérente (120) en au moins une partie de référence (150 ; 150-x) et au moins une partie d'objet (140 ; 140-x);
et guider la au moins une partie de référence (150 ; 150-x) et la au moins une partie d'objet (140 ; 140-x) de telle sorte que la au moins une partie d'objet (140' ; 140-x) et la au moins une partie de référence (150 ; 150-x) traversent le matériau d'enregistrement (200) depuis des côtés opposés et interfèrent à l'intérieur du matériau d'enregistrement (200), dans lequel au moyen de la au moins une partie d'objet (140 ; 140-x) les plusieurs images (12-x) sont projetées sous différentes directions d'exposition (210-x) par rapport au matériau d'enregistrement (200), dans lequel chacune des plusieurs images (12-x) est liée à exactement l'une des différentes directions d'exposition (210-x),
dans lequel
les directions d'exposition (210-x) se trouvent toutes dans un même plan et au moins par paires forment un angle de convergence standard (α) pour une vision humaine à une distance standard et peuvent être attribuées à une direction de vision, de sorte que pour un observateur humain ayant une distance interoculaire standard, un effet stéréoscopique est perceptible depuis la direction de vision,
**caractérisé en ce qu'**
un angle (γ) entre deux directions de regard (11-x), pour chacune desquelles depuis deux des différentes directions de détection (10-x) formant un angle de convergence standard (α) une paire d'images monoscopiques (12-x) incorporant un image stéréoscopique est capturé, est supérieur à un angle entre les directions de vision associées (211-x) qui correspondent aux directions d'exposition (210-x) correspondant aux paires d'images monoscopiques.

2. Procédé selon la revendication 1, **caractérisé en ce que** les images monoscopiques (12-x) comprennent les images monoscopiques (12-x) pour au moins trois vues stéréoscopiques différentes depuis de différentes directions de regard (11-x) de l'objet tridimensionnel (5).

3. Procédé selon l'une des revendications 1 ou 2, **caractérisé en ce que** pour au moins une des directions d'exposition (210-x), il existe deux autres des directions d'exposition (210-x), chacune d'entre elles conjointement avec la au moins une direction d'exposition (210-x) comprend l'angle de convergence standard (α) pour une vision humaine.

4. Procédé selon l'une des revendications 1 à 3, **caractérisé en ce que** la au moins une partie d'objet (140-x) est divisée en autant de parties que d'images monoscopiques (12-x), projetées au moyen des parties, sont exposées depuis les différentes directions d'exposition dans l'hologramme de sécurité, et l'exposition des images monoscopiques a lieu simultanément.

5. Procédé selon l'une des revendications 1 à 3, **caractérisé en ce que** les images monoscopiques (12-x) sont exposées avec un retard temporel ou par paires avec un retard temporel dans le matériau d'enregistrement.

6. Procédé selon l'une des revendications 1 à 5, **caractérisé en ce que** l'angle de convergence standard est construit pour une distance de vision cible entre 30 cm et 50 cm comme distance de vision standard pour une distance oculaire standard de 6,5 cm.

7. Hologramme de sécurité 201, qui est formé comme un hologramme volumique multiplex dans une couche holographique (200), dans lequel plusieurs, au moins trois, images monoscopiques (12-x) du même objet tridimensionnel (5) sont exposées, qui représentent l'objet tridimensionnel (5) depuis de différentes directions de capture (10-x), et lors d'une irradiation de lumière de référence (350) sur la couche holographique reconstruisent sous différentes directions de reconstruction (310-x) par rapport à la couche holographique (200) les plusieurs images monoscopiques (12'-x) reconstruites, dans lequel chacune des plusieurs images monoscopiques reconstruites (12'-x) est attribuée exactement et uniquement à l'une des différentes directions de reconstruction (310-x), dans lequel les directions de reconstruction (310-x) se trouvent toutes dans un même plan et forment au moins par paires un angle de convergence standard (α) pour une vision humaine, de sorte qu'un effet stéréoscopique est perceptible pour observateur humain depuis l'une des différentes directions de vision, **caractérisé en ce qu'**un angle (γ) entre deux directions de regard (11-x), pour chacune desquelles depuis deux des différentes directions de détection (10-x) formant un angle de convergence standard (α) une paire d'images monoscopiques (12-x) incorporant un image stéréoscopique est capturé, est supérieur à un angle entre les directions de vision associées (211-x) sous lesquelles les paires d'images monoscopiques correspondantes sont reconstruites, qui correspondent aux deux directions d'observation (11-x).

8. Hologramme de sécurité selon la revendication 7, **caractérisé en ce que** les multiples images monoscopiques (12-x) comprennent les images monoscopiques (12-x) pour au moins trois directions de vision différentes (311-x) pour générer des vues stéréoscopiques de l'objet tridimensionnel (5).
